# EUROPEAN PATENT APPLICATION

(11) **EP 2 680 461 A1**
(43) Date of publication of application: **01.01.2014**
(21) Application number: 12173705.0
(22) Date of filing: 26.06.2012
(51) Int. Cl.: H04B 7/10, H04B 5/00, H04B 7/04

(54) **METHOD AND SYSTEM FOR HIGH SPEED COMMUNICATION**

(71) Applicant: IMEC, 3001 Leuven (BE)
(72) Inventor: Brebels, Steven, 3001 Leuven (BE); Soens, Charlotte, 3001 Leuven (BE); De Raedt, Walter, 3001 Leuven (BE)
(74) Representative: Clerix, André

(57) **Abstract**

The present disclosure relates to a method for communication and a communication system for high data rate communication. The communication system comprises a transmitter and a receiver, the transmitter comprising means to transmit data through a first antenna array and the receiver comprising means to receive data through a second antenna array, wherein each antenna array comprises at least two identical antenna elements having a at least one connector terminal for feeding data to or from the antenna elements, the antenna elements being rotated with respect to each other around the center of the antenna array, and wherein the transmitter and the receiver are arranged such that their respective antenna arrays face each other.

## Description

### TECHNICAL FIELD

The present disclosure relates to a method for communication and a communication system utilizing antenna arrays for transmission and reception for high speed communication.

### DESCRIPTION OF THE RELATED TECHNOLOGY

With the constant increase in data use and storage demands and with advancing of mobile devices, high data rate communication is becoming of high importance. Several high speed communication solutions, wired (e.g. USB 3.0 and Thunderbolt) and wireless (IEEE 802.11ac, ad standards) have been proposed. However, these solutions are still expensive, relatively power hungry and offer moderate speed. Moreover, they are not scalable in terms of speed and size. For example, the miniaturization of mechanical connectors is become more and more problematic as high production precision is required. For optical solutions, hybrid packaging is often necessary, which complicates the manufacturing process.

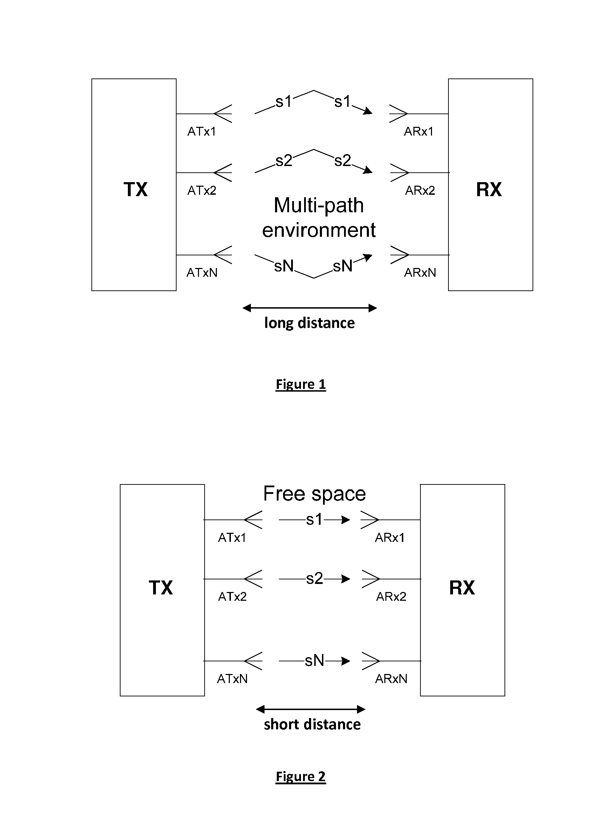

To achieve high data rate communications, convention solutions require high complexity of the modulation scheme. MIMO (Multiple Input Multiple Output) communications scheme offer relative high speed communication by still using less complex modulation schemes. In turn, the circuit implementation has reduced complexity. Thus, MIMO scheme is an interesting communication solution which provides relatively high speed communication without using high spectral efficient modulation schemes (e.g. 128QAM or higher). MIMO communication uses several antennas at both communication ends - at the transmitter and the receiver side - as shown in **Figure 1****.** In consequence, not one but several radio channels are simultaneously used, taking advantage of the communication diversity and thus, reaching higher channel capacity. Typically, MIMO communication systems work in multipath environments, i.e. each antenna at the receiver side receives signals from different antenna paths (not only from its respective member from the transmitter side, but from its neighbors as well). At the receiver the received information from the different paths is combined to take advantage of the channel diversity and to get high channel capacity. This however, requires knowledge about the channel characteristics and additional signal processing. Understanding the channel allows to manipulate the phase and amplitude of each transmitter in order to form the antenna beam correctly. This process of understand the characteristics of the channel is referred as a channel estimation. A known signal is sent to the receiver to get an estimation of the channel environment, which is then communicated back to the transmitter. The transmitter can then apply the correct phase and amplitude adjustments to direct the antenna beam towards the receiver. When beamforming is utilized adjustment of the phases and amplitude of each transmitter is required. Further, in a beamformer optimized for spatial diversity or spatial multiplexing, each antenna element simultaneously transmits a weighted combination of two data symbols, which are then separated at the receiver. The estimation of the weights is a complex mathematical operation based on singular value decomposition of the channel transmission matrix and is commonly referred as data mapping or MIMO pre/decoding. The resulting right-singular-vectors give the coefficients (weights) for the linear combination of the data streams feeding the antennas at the transmitter (i.e. the MIMO precoding). The MIMO decoder at the receiver uses the coefficients from the left-singular-vectors to linearly combine the output of the antennas in the received data streams. Further, in a mobile scenario the MIMO system needs to be adaptive since the channel is dependent on the spatial arrangement of the transmitter and receiver. The channel state needs to be estimated and the coefficients in the MIMO pre/decoder need to be recalculated.

Short range MIMO communication scheme, as shown in **Figure 2** is a particular case of MIMO communication when transmitter and receiver are placed very close to each other at a distance several times the aperture width of the antenna element. In this specific arrangement, both ends are in Line of Sight (LOS), there are no obstacles on the direct path between the transmitter and the receiver, and hence the Signal to Noise Ratio (SNR) is very high and thus higher channel capacity than conventional MIMO scheme can be reached. The data transmission can be considered as a parallel data transmission scheme with as many direct links as there are antennas. Because of the short distance between the respective antenna arrays, the transmission scheme does not rely on multipath components. The singular value decomposition of the channel transmission matrix and hence the MIMO pre/decoding become simpler than conventional MIMO scheme and therefore the system circuitry as well. The mapping comes close to a one-to-one mapping and hence the channel capacity is close to optimal. In reality, however, the multipath components are diminished but not completely eliminated. The MIMO pre/decoding is still adaptive as channel estimation and singular value decomposition for each different spatial arrangement is still required.

Patent application W02012/003061 proposes a MIMO communication system for near-field communication. However, the MIMO pre/decoding is still adaptive as for each different device arrangement, the channel characteristics are required to derive the optimal value of the coefficients used for the MIMO pre/decoding.

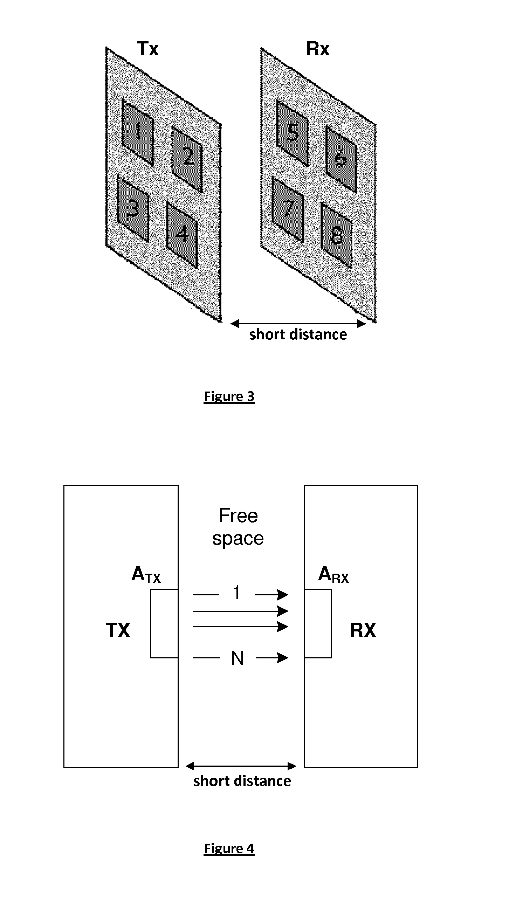

Hiragaet al, "Ultra-high-speed transmission over millimeter-wave using microstrip antenna array," Radio and Wireless Symposium (RWS), 2010 IEEE, pp. 673-676, 10-14 Jan. 2010, proposes a microstrip antenna array for high-speed wireless communication devices operating in the mm-wave frequency band. The proposed antenna array is shown schematically in Figure 3. It comprises of antenna elements arranged in an array having same shape and polarization. Similarly to W02012/003061 patent application, the proposed antenna array still does not allow for simplification of the communication device as the MIMO pre/decoding is still adaptive.

It is apparent there is a need for less complex, power and area efficient communication devices allowing for high data rate communication.

### AIM OF THE PRESENT DISCLOSURE

The present disclosure aims at providing a method for communication and a communication system utilizing antenna arrays for transmission and reception for high speed communication.

### SUMMARY OF CERTAIN ASPECTS

In one aspect, the present disclosure relates to a communication system comprising a transmitter and a receiver, the transmitter comprising means to transmit data through a first antenna array and the receiver comprising means to receive data through a second antenna array, wherein each antenna array comprises at least two identical antenna elements having a at least one terminal for feeding data to or from the antenna elements, the antenna elements being rotated with respect to each other and around the center of the antenna array, and wherein the transmitter and the receiver are arranged such that their respective antenna arrays face each other. This way a rotation invariant antenna array is realized.

In one embodiment, the antenna arrays are placed at a distance comparable to the total size of the antenna array, thereby allowing a high data rate communication.

In one embodiment, the antenna arrays are mirrored with respect to each other. That is, only complementary antenna arrays can communicate.

In another embodiment, the antenna elements are symmetric with respect to the radial line from the center of the antenna array, thereby both antenna arrays are fully identical. This reduces production cost and it allows to have communication between any pair of antenna array (complementarity is not required).

Preferably, the antenna elements are microstrip or aperture antennas.

Preferably, the transmitter and the receiver are implemented in digital CMOS or a Silicon interposer technology, thereby allowing for 3D stacked implementation. Such layered design may be defined by the different functionalities of the device. Further, it allows for implementation of more resistant to parasitics design, e.g. by feeding the data to and from the antenna elements using a large number of lower speed parallel bus lines. The data can be also serialized to high speed channels at any one or combination of the different layers (digital, analogue baseband and/or RF).

In another embodiment, each communication device has a MIMO pre/decoding defined by the circulant structure of the channel matrix. The singular value decomposition of such circulant matrix leads to simple weight coefficients (representing rotation) in the MIMO pre/decoder. Hence the MIMO pre/decoding consists of progressive phase shifting, i.e. a linear combination of phase-shifted/rotated data symbols, which is equivalent to a Discrete Fourier Transform (DFT). This further allows efficient MIMO pre/decoding in any of the domains of the communication device, i.e. in digital baseband, in analog baseband or in the radio frequency (RF) domains.

In yet another embodiment, the transmitter and the receiver are further connected to a communication cable, wherein one end of the communication cable is connected to the first antenna array and the other end of the cable to the second antenna array, wherein the connection is arranged for allowing utilization of the different propagation modes of the cable. Preferably, the communication cable may be connected to the first antenna array and to the second antenna array via a third and a fourth antenna arrays, wherein the connection is arranged for allowing utilization of the different propagation modes of the cable. This allows for achieving wired high speed communication. The communication cable may be a dielectric or a metal waveguide.

Another aspect of the present disclosure relates to a communication network comprising a communication system as described.

In yet another aspect, the present disclosure relates to a method for communication comprising a first antenna array and a second antenna array, each antenna array comprising at least two identical antenna elements having at least one terminal for feeding data to or from the antenna elements, the antenna elements being rotated with respect to each other and around the center of the antenna array, wherein the antenna arrays are placed at a distance comparable to the total size of the antenna array, wherein each antenna elements from the first antenna array is communicating with its corresponding element from the second antenna array.

### BRIEF DESCRIPTION OF THE DRAWINGS

For a better understanding of the present disclosure, reference will now be made, by way of example only, to the accompanying drawings in which:

Presently preferred embodiments are described below in conjunction with the appended figures and figures description, wherein:

Figure 1 illustrates a conventional communication system arranged for standard MIMO communication.

Figure 2 illustrates a conventional communication system arranged for high speed data MIMO communication.

Figure 3 illustrates the antenna array of the conventional communication systems shown in Figure 1 and 2.

Figure 4 illustrates a communication system according to one embodiment of the present disclosure.

Figure 5 illustrates an antenna array with 6 antenna elements according to an embodiment of the present disclosure.

Figure 6 illustrates antenna arrays with 3 antenna elements for the transmitter and receiver according to an embodiment of the present disclosure.

Figure 7A and 7B illustrate possible radiation schemes for the antenna arrays of Figure 6.

Figure 8 illustrates antenna arrays with 2 antenna elements for the transmitter and receiver according to an embodiment of the present disclosure.

Figure 9 illustrates an antenna array comprising 4 antenna elements according to the present disclosure.

Figure 10 illustrates a communication system according to an embodiment of the present disclosure.

Figure 11 illustrates a communication system according to an embodiment of the present disclosure.

### DETAILED DESCRIPTION OF CERTAIN ILLUSTRATIVE EMBODIMENTS

The present invention will be described with respect to particular embodiments and with reference to certain drawings but the invention is not limited thereto. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting of only components A and B. It means that with respect to the present invention, the only relevant components of the device are A and B.

**Figure 4** shows an embodiment of the present disclosure, showing a communication system operating at 60GHz frequency band utilizing beamforming. Beamforming requires utilization of multiple antennas, commonly referred as an antenna array, which substantially increases the information throughput. To allow for high data rate communication, the devices (TX and RX) may be placed close to each other at a distance comparable to the total size of the antenna array. Placing their respective antenna arrays (A_{TX}, A_{RX}) at such distance can be regarded as a parallel data transmission scheme with as many direct communication links as there are antennas (i.e. N antennas, N>1). The multipath components are less pronounced and hence the Signal-to-Noise (SNR) ratio is increased significantly.

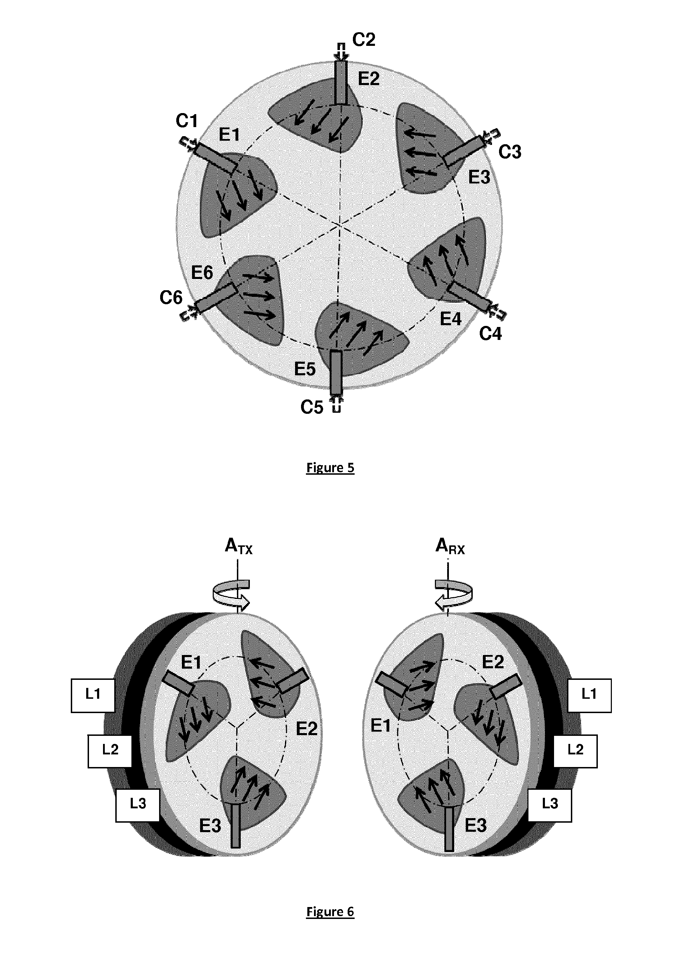

In one embodiment, the antenna array of the transmitter (A_{TX}) and the receiver (A_{RX}) comprise N identical antennas elements (with N>1) within the array itself. The elements in the two arrays are not required to be identical. For example a patch, aperture, dipole or other antenna may be used. The antenna elements may have any type of polarization, such as linear, dual-polarization or circular, however for illustration purposes only linearly polarized antennas will be shown. One possible implementation of an antenna array with e.g. 6 antenna elements (E1÷E6) is shown in **Figure 5****,** where each element is fed with a signal via its respective connector (C1÷C6). The antenna elements are rotated on a circle with respect to each other and around the center of the antenna array by 2π/N, where N is the number of antenna elements, thereby creating a rotation invariant antenna array. Thus, the same antenna array is observed when rotating the array with an angle of 2π/N. The channel transmission matrix becomes circulant when transmit and receive antenna arrays are coaxially facing each other, have the same number of elements, and the same rotation invariance (referred as rotation symmetry in mathematics). Notice it is not required that both arrays to be identical or mirrored copy of each other. The singular value decomposition of such circulant matrix leads to simple weight coefficients (representing rotation) in the MIMO pre/decoder. Hence the MIMO pre/decoding consists of progressive phase shifting, i.e. a linear combination of phase-shifted/rotated data symbols, which is equivalent to a Discrete Fourier Transform (DFT). Thus, all antennas radiate signals with same amplitude but different phases, where the required phase is defined by the rotation angle of the antenna element. As a result, a phase shift of m·n·2π/N for m-th singular value, m∈(0÷N-1) and the n-th antenna element, n∈(0÷N-1) is achieved.

This allows the efficient MIMO pre/decoding in any of the domains of the communication device, i.e. in digital baseband, in analog baseband or in the radio frequency (RF) domains. For example, for a communication device with two arrays of 4 antennas, the MIMO pre/decoding consists of phase shifts that are an integer multiple of 90° (i.e. 360°/4). A very efficient analogue baseband solution can be realized by simply inverting and/or switching the I and Q signal paths. Thus, simplifying greatly the device circuitry. If implemented in the RF path, a fixed passive beamformer (e.g. Butler, Blass matrix or a Rotman lens) or an active beamformer (e.g. an up/down-converter using a polyphase local oscillator) may be used. In digital domain the MIMO pre/decoder can be implemented using an FFT thereby reducing the number of multiplications and additions required.

Furthermore, the left and right singular vectors are independent from the distance between the antenna arrays, i.e. no amplitude or phase adjustment is required when the distance between the arrays increases. Thus, the transition from N effective parallel data channels, when the arrays are placed close to each other, to a reduced number effective parallel data channels when separated further apart is seamless. For very far distances larger than the total size of the antenna array, only 2 effective channels are available for antenna arrays with more than two elements, and only 1 effective channel for antenna array having two antennas. The same degradation applies when antenna elements of both arrays are rotated with respect to each other along the common coaxial axis such that the antenna elements do not face each other perfectly.

The proposed MIMO system with rotation invariant antenna arrays therefore simplifies the MIMO pre/decoder by offering an elegant/simple solution for the singular-value decomposition calculation of the used weight coefficients.

Highly area efficient implementation may be achieved by designing the communication device (i.e. receiver, transmitter) in digital CMOS or a Silicon interposer technology using 3D stacking, as shown in **Figure 6****.** The chip may be realized for example in three layers. The layer split may be defined by the different functionalities of the device. For example, the digital baseband can be implemented in the first layer (L1), the analogue high frequency layer in the second layer (L2), and the antenna array in the third layer (L3). Further, in such 3D build-up, more resistant to parasitics design can be easily implemented by feeding the data to and from the antenna elements using a large number of lower speed parallel bus lines. Moreover, the data can be serialized to high speed channels at any one or combination of the different layers (digital, analogue baseband and/or RF).

As shown in the figure, the feeding of the signal through the respective terminals (C1÷C3) is not symmetric with respect to the antenna element. This requires that the antenna arrays of the transmitter (A_{TX}) and the receiver (A_{RX}) are mirrored copy of each other.

The communication between the antenna arrays occurs only between the antenna elements with matching polarization, i.e. having coinciding direction of the electric field. That is, element E1 of the first antenna array (A_{TX}) communicates directly to element E2 of the second antenna array (A_{RX}), element E2 of A_{TX} communicates with element E1 of A_{RX} and element E3 of A_{TX} to element E3 of A_{RX}.

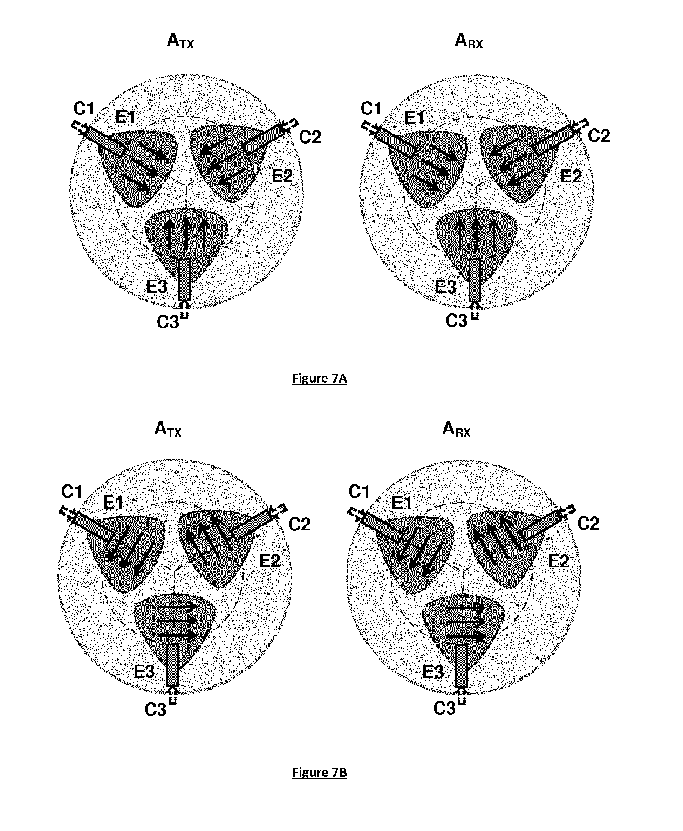

In another embodiment, the antenna arrays at the transmitter (A_{TX}) and at the receiver side (A_{RX}) may be design to be identical if the antenna elements are symmetric with respect to the radial line from the center of the array. Preferably, the antenna terminals should have the same symmetry. This way the antenna design is completely symmetric - the A_{TX} and A_{RX} are fully identical - which simplifies further the array design and production costs. Two examples of antenna arrays with fully identical designs (A_{TX} and A_{RX}) are shown in **Figure 7A** and **7B****,** both with 3 antenna elements having polarization (shown as solid arrows) and arranged symmetrically with respect to the radial lines (dashed lines) from the center of the antenna array. Again, for simplification of the illustration, the elements are drawn with linear polarization. Different polarization schemes are however possible. **Figure 7A** shows a polarization scheme where all antennas have polarization oriented towards the center of the antenna array, while **Figure 7B** shows antennas with polarization oriented along the circle line. Again, communication occurs only between the corresponding antenna elements having same polarization direction, i.e. E1 to E1, E2 to E2, and E3 to E3 respectively.

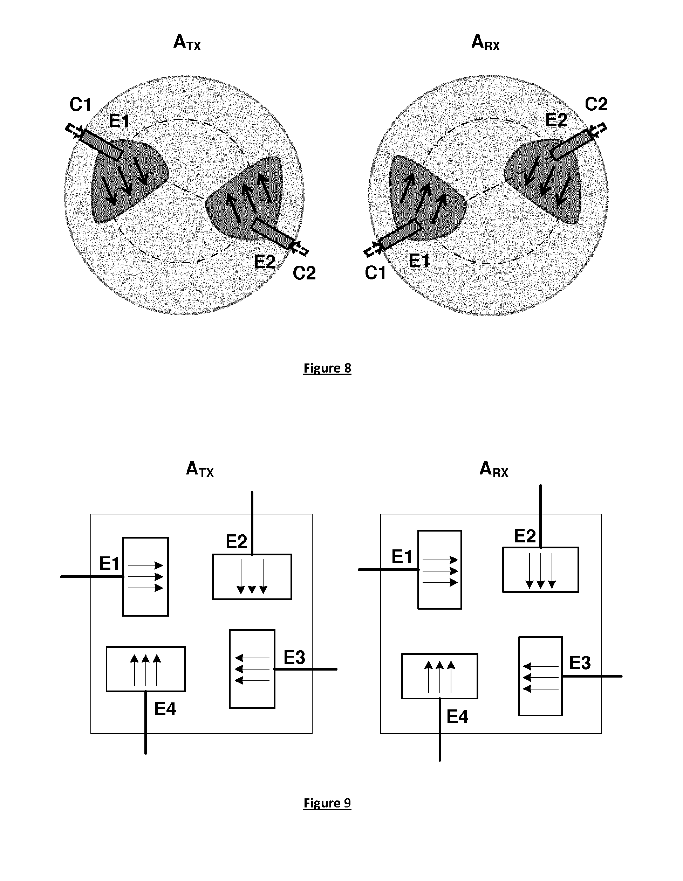

The simplest rotational invariant antenna array comprises two antennas (E1, E2) rotated with respect to each other by 180°, as shown in **Figure 8****.** In this design, the terminals (C1, C2) are not symmetric with respect to the antenna element. Thereby the antenna arrays have to be mirror copy of each other.

**Figure 9** shows a digital CMOS realization of fully symmetrical rotational invariant antenna arrays with 4 antennas for the transmitter and the receiver (A_{TX} and A_{RX}). The antenna elements are open waveguide antennas rotated by 90° around the center of the chip. Different antennas can be used as well. Again for simplicity, the antenna elements are illustrated as linearly polarized antennas, however other polarizations (e.g. dual-polarization or circular polarization) are also possible.

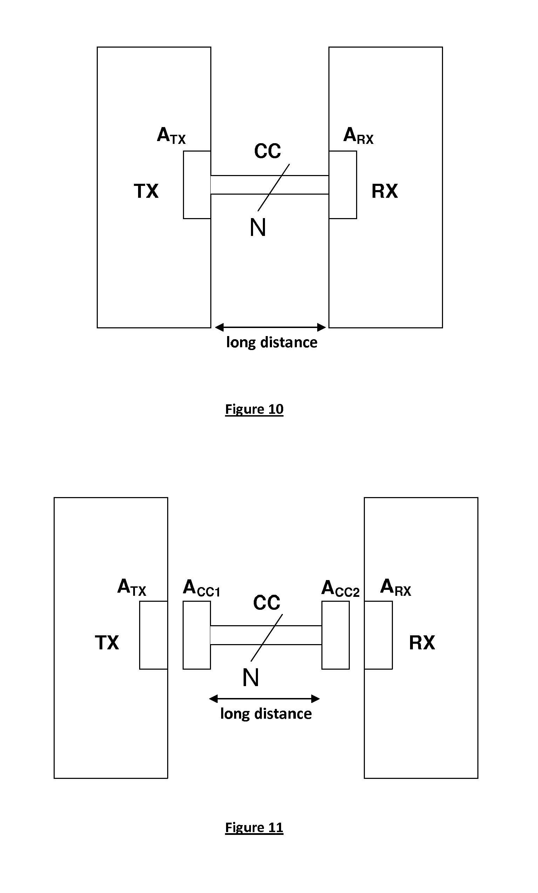

In another embodiment, the TX and RX may communicate via a communication cable (CC), e.g. any type of a dielectric or a metal waveguide, as shown in **Figure 10**. Here, each end of the cable may be directly connected to the respective antenna array, thus the antenna elements of the A_{TX} are communicating via the waveguide to its respective antenna element at the receiver side (A_{RX}). In this configuration all antennas transmit through one waveguide. If the waveguide has the same rotation invariance as the antenna arrays at both ends of the waveguide the transmission matrix is still circulant such that the same simplified MIMO pre/decoding approach can be applied to the wired solution as well. Preferably, the electric and magnetic field in the plane of the antenna array for the different singular values should match the electrical and magnetic field for the propagation modes of the waveguide. This matching allows to avoid signal dispersion and equalization circuitry can be avoided. The propagation modes of the guide depend on the operating wavelength and the shape and size of its cross section. For example, for a 4-element array both square, octagon and circular cross sections are possible. The size of the cross section can be optimized for optimal field match. Further, the communication cable may comprise multiple waveguides. The number of waveguides is a design option and it can be also equal to the number of antenna elements.

In yet another embodiment, each end of the communication cable may be connected to the antenna arrays A_{TX} and A_{RX} via additional antenna arrays (A_{CC1} and A_{CC2}), as shown in **Figure 11****.** In this arrangement, wireless communication is performed from A_{TX} to A_{CC1}, and, from A_{CC2} to A_{RX}. Any of the techniques for one wireless connection can be applied for both sides of the cable.

The proposed solution using the communication cable overcomes the cost, size and speed limitations of the current wired solutions and the equalization circuitry can be avoided.

The proposed disclosure allows for implementing high data rate communication for any type of wireless and wired solutions, for example, computer buses, network interfaces, grid computing systems, etc. offering throughput larger than 100Gbps for 16QAM modulation at 60GHz using 4-element antenna array. The proposed solution can be easily scaled to higher mm-wave frequencies. This has the advantage of larger bandwidth and smaller wavelength. Therefore larger antenna arrays with a higher data rate per channel/antenna can be realized.

## Claims

1. A communication system comprising a transmitter (TX) and a receiver (RX), the transmitter comprising means to transmit data through a first antenna array (A_{TX}) and the receiver comprising means to receive data through a second antenna array (A_{Rx}),
wherein each antenna array comprises at least two identical antenna elements (E1,E2) having at least one terminal (C1,C2) for feeding data to or from the antenna elements, the antenna elements being rotated with respect to each other and around the center of the antenna array, and
wherein the transmitter and the receiver are arranged such that their respective antenna arrays face each other.

2. The communication system as in Claim 1, wherein the antenna arrays are placed at a distance comparable to the total size of the antenna array, thereby allowing a high data rate communication.

3. The communication system according to any of the previous claims, wherein the antenna arrays (A_{RX}, A_{TX}) are mirrored with respect to each other.

4. The communication system according to any of the previous claims, wherein the antenna elements are symmetric with respect to the radial line from the center of the antenna array.

5. The communication system according to any of the previous claims, wherein the antenna elements are microstrip or aperture antennas.

6. The communication system according to any of the previous claims, wherein the transmitter and the receiver have a MIMO pre/decoding defined by the circulant structure of the channel matrix.

7. The communication system according to any of the previous claims, wherein the MIMO pre/decoding is equivalent to a Discrete Fourier Transform (DFT).

8. The communication system according to any of the previous claims, wherein the transmitter and the receiver are implemented in digital CMOS or a Silicon interposer technology, thereby allowing for 3D stacked implementation.

9. The communication system according to any of the previous claims, wherein the transmitter (TX) and the receiver (RX) are further connected to a communication cable (CC), wherein one end of the communication cable is connected to the first antenna array (A_{TX}) and the other end of the cable to the second antenna array (A_{RX}), wherein the connection is arranged for allowing utilization of the different propagation modes of the cable.

10. The communication system according to any of the previous claims, wherein the communication cable (CC) is connected to the first antenna array (A_{TX}) and to the second antenna array (A_{RX}) via a third (A_{CC1}) and a fourth (A_{CC2}) antenna arrays, wherein the connection is arranged for allowing utilization of the different propagation modes of the cable.

11. The communication system according to any of the previous claims, wherein the communication cable is a dielectric or a metal waveguide.

12. A communication network comprising a communication system as in Claim 1.

13. A method for communication comprising a first antenna array (A_{TX}) and a second antenna array (A_{RX}), each antenna array comprising at least two identical antenna elements (E1, E2) having at least one terminal (C1,C2) for feeding data to or from the antenna elements, the antenna elements being rotated with respect to each other and around the center of the antenna array, wherein the antenna arrays are placed to face each other at a distance comparable to the total size of the antenna array, wherein each antenna element (E1;E2) from the first antenna array (A_{TX} is communicating with its corresponding element (E1;E2) from the second antenna array (A_{RX}).
